# EUROPEAN PATENT APPLICATION

(11) **EP 3 945 386 A1**
(43) Date of publication of application: **02.02.2022**
(21) Application number: 21182999.9
(22) Date of filing: 30.06.2021
(51) Int. Cl.: G05B 23/02

(54) **SYSTEM AND METHOD FOR DETERMINING MANUFACTURING PLANT TOPOLOGY AND FAULT PROPAGATION INFORMATION**

(30) Priority: 31.07.2020 US 202063059446 P; 01.10.2020 US 202017061248
(71) Applicant: Palo Alto Research Center Incorporated, Webster, NY 14580 (US)
(72) Inventor: YU, Hong, San Jose, 95134 (US); RAGHAVAN, Ajay, Mountain View, 94043 (US); JUNG, Deokwoo, Mountain View, 94040 (US); MOSTAFAVI, Saman, San Francisco, 94114 (US)
(74) Representative: Gill Jennings & Every LLP

(57) **Abstract**

A system (+00) is provided for determining a manufacturing network topology and fault propagation information. During operation, the system stores data associated with a processing system which includes machines (104) and associated processes, wherein the data includes timestamp information, machine status information, and product-batch information. The system determines, based on the data, a network topology which corresponds to the processing system, wherein the network topology indicates flows of outputs between the machines as part of the processes. The system determines utilization information of a plurality of the machines of the processing system. The system displays one or more of the flows of outputs based on the utilization information, thereby facilitating diagnosis of the processing system.

## Description

### RELATED APPLICATION

This application claims the benefit of U.S. Provisional Application No. 63/059,446, Attorney Docket Number PARC-20200124US01, titled "System and Method for Determining Manufacturing Plant Topology and Fault Propagation Information," by inventors Hong Yu, Ajay Raghavan, Deokwoo Jung, and Saman Mostafavi, filed on 31 July 2020, the disclosure of which is incorporated herein by reference in its entirety.

### BACKGROUND

### Field

This disclosure is generally related to data mining. More specifically, this disclosure is related to a system and method for determining manufacturing plant topology and fault propagation information.

### Related Art

In modern manufacturing, the network can be dynamic, with machines configured into clusters to suit the changing demands of production. The dynamic nature of complex manufacturing networks can create challenges in monitoring the condition of a production line. Current approaches for monitoring production line conditions can include condition-based monitoring of equipment, determining the root cause of equipment failures, and forecasting potential failures.

Condition-based monitoring of equipment, especially of key or essential equipment, can be used to improve the availability and reliability of equipment. However, most of the approaches for condition-based equipment monitoring may require the installation of additional sensing systems, and in general, focus on a single component or machine, rather than on the entire system.

Root cause analysis and failure forecasting in the current industry practice generally relies heavily on domain experts/expertise, i.e., the experience of field engineers generally forms the basis for describing the causal correlations between different processes and machines. In addition, manual trial-and-error approaches may be used to identify the root causes for failures. These current practices are limited by several constraints. First, the domain knowledge from more experienced domain experts cannot be transferred easily to and utilized by other people at a particular manufacturing site. Second, domain experts may be biased in their assessments. Third, as modern production lines grow increasingly more complicated, the practice of manually pinpointing the root cause among a large collection of machines may become increasingly unmanageable.

Another approach for monitoring the condition of the production line can include using deep learning to extract knowledge from manufacturing logs. However, this approach requires a large amount of data (usually labeled data which can be difficult to acquire). Furthermore, interpreting these black-box models may be difficult, which can limit their use in mission-critical manufacturing systems.

Thus, while some current approaches exist for monitoring the condition of a production line, these current approaches (which rely on installation of additional sensors, the knowledge of domain experts, and interpretation of black box models) are limited by several constraints, and do not provide an efficient method for monitoring the condition of a production line.

### SUMMARY

One embodiment provides a system for determining a manufacturing network topology and fault propagation information. During operation, the system stores data associated with a processing system which includes machines and associated processes, wherein the data includes timestamp information, machine status information, and product-batch information. The system determines, based on the data, a network topology which corresponds to the processing system, wherein the network topology indicates flows of outputs between the machines as part of the processes. The system determines utilization information of a plurality of the machines of the processing system. The system displays one or more of the flows of outputs based on the utilization information, thereby facilitating diagnosis of the processing system.

In some embodiments, the system displays the one or more flows of outputs by displaying a graph of the network topology. A respective node in the graph indicates, for a respective output, a first machine which processes the respective output and a first process associated with the first machine, and a respective edge in the graph indicates, for the respective output, a flow from an originating node to a destination node.

In some embodiments, a size of the respective node in the displayed graph corresponds to a number of parts which are processed by the first machine, and a weight of the respective edge in the displayed graph indicates the utilization information, including a utilization rate, associated with the originating node and the destination node.

In some embodiments, the respective output is held for a period of time in a physical buffer between machines indicated by the originating node and the destination node.

In some embodiments, the product-batch information comprises a lot number which corresponds to a plurality of physical objects of the processing system, wherein the physical objects share at least one common characteristic, and the machine status information comprises one or more of a stopcode and a fault type.

In some embodiments, the outputs comprise materials and include physical objects upon which the machines of the processing system perform the processes, and a respective physical object is associated with a lot number and a production line of the processing system.

In some embodiments, the system determines, based on the network topology, a plurality of fault propagation paths. The system assigns a weight to each of the fault propagation paths. The system displays the fault propagation paths with their assigned weight.

In some embodiments, the system displays the fault propagation paths by displaying a graph of the fault propagation paths. A respective node in the graph indicates, for a respective output, a first machine which processes the respective output, a first process associated with the first machine, and a stopcode associated with the first machine and the first process in processing the respective output. A respective edge in the graph indicates, for the respective output, a logical flow from an originating node to a destination node.

In some embodiments, a size of the respective node in the displayed graph corresponds to a number of stopcodes associated with nodes prior to the first machine in the displayed graph. A weight of the respective edge in the displayed graph indicates a frequency of occurrence in the data of stopcodes associated with the originating node and the destination node. Assigning the weight to the fault propagation paths is based on the weight of the respective edge.

In some embodiments, the processing system comprises one or more of: a manufacturing system, wherein the network topology further indicates flows of materials between the machines as part of the processes; a cloud or cluster computing system, wherein the network topology further indicates flows of distributed or parallel computations or simulations associated with outputs between the machines as part of the processes of the cloud or cluster computing system; and a supply chain system, wherein the network topology further indicates flows of materials associated with delivery and distribution outputs between the machines as part of the processes of the supply chain system.

### BRIEF DESCRIPTION OF THE FIGURES

FIG. 1 illustrates an exemplary environment for determining a manufacturing network topology and fault propagation information, in accordance with an embodiment of the present application.
FIG. 2A depicts a diagram of an exemplary flow of materials between machines as parts of different processes, in accordance with an embodiment of the present application.
FIG. 2B illustrates a diagram of a superficial malfunction and a true root cause in an environment with multiple processes and machines, in accordance with an embodiment of the present application.
FIG. 2C illustrates a diagram of activity time involved in a manufacturing production line, including a downtime, in accordance with an embodiment of the present application.
FIG. 3A illustrates an exemplary environment for determining a manufacturing network topology and fault propagation information, in accordance with an embodiment of the present application.
FIG. 3B illustrates an exemplary environment for determining a manufacturing network topology and fault propagation information, in accordance with an embodiment of the present application.
FIG. 3C illustrates an exemplary environment for determining a manufacturing network topology and fault propagation information, in accordance with an embodiment of the present application.
FIG. 4 illustrates an exemplary machine/stopcode dependency graph with an enriched trie data structure, in accordance with an embodiment of the present application.
FIG. 5-1 illustrates an exemplary machine dependency graph, including an extracted plant topology and material flow, in accordance with an embodiment of the present application.
FIG. 5-2 illustrates an enlarged view of the left half of FIG. 5-1.
FIG. 5-3 illustrates an enlarged view of the right half of FIG. 5-1.
FIG. 6-1 illustrates an exemplary fault propagation graph, in accordance with an embodiment of the present application.
FIG. 6-2 illustrates an enlarged view of the left half of FIG. 6-1.
FIG. 6-3 illustrates an enlarged view of the right half of FIG. 6-1.
FIG. 7 presents a flow chart illustrating a method for determining a manufacturing network topology and fault propagation information, in accordance with an embodiment of the present application.
FIG. 8 illustrates an exemplary distributed computer and communication system that facilitates determining a manufacturing network topology and fault propagation information, in accordance with an embodiment of the present application.

### DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

The embodiments described herein provide a system which effectively and efficiently extracts, from manufacturing log data, information associated with the flow of materials through various processes and multiple machines in a manufacturing system or network. The system can use the extracted data to determine the network topology of the manufacturing system and to generate the corresponding fault propagation paths, which can facilitate fault diagnosis in the manufacturing system by converting a large amount of electronic log data into a user-friendly visualization for quick on-site diagnosis.

As described above, the dynamic nature of complex manufacturing networks can create challenges in monitoring the condition of a production line. Current approaches for monitoring production line conditions can include condition-based monitoring of equipment, determining the root cause of equipment failures, and forecasting potential failures.

Condition-based monitoring of equipment, especially of key or essential equipment, can be used to improve the availability and reliability of equipment. However, most of the approaches for condition-based equipment monitoring may require the installation of additional sensing systems, and in general, focus on a single component or machine, rather than on the entire system.

Root cause analysis and failure forecasting in the current industry practice generally relies heavily on domain experts/expertise, i.e., the experience of field engineers generally forms the basis for describing the causal correlations between different processes and machines. In addition, manual trial-and-error approaches may be used to identify the root causes for failures. These current practices are limited by several constraints. First, the domain knowledge from more experienced domain experts cannot be transferred easily to and utilized by other people at a particular manufacturing site. Second, domain experts may be biased in their assessments. Third, as modern production lines grow increasingly more complicated, the practice of manually pinpointing the root cause among a large collection of machines may become increasingly unmanageable.

Another approach for monitoring the condition of the production line can include using deep learning to extract knowledge from manufacturing logs. However, this approach requires a large amount of data (usually labeled data which can be difficult to acquire). Furthermore, interpreting these black-box models may be difficult, which can limit their use in mission-critical manufacturing systems.

Thus, while some current approaches exist for monitoring the condition of a production line, these current approaches (which rely on installation of additional sensors, the knowledge of domain experts, and interpretation of black box models) are limited by several constraints, and do not provide an efficient method for monitoring the condition of a production line.

The embodiments described herein provide a system which can extract knowledge about manufacturing networks from log data associated with the networks and the manufacturing system, including the flow of materials through multiple machines as part of multiple processes. Based on the log data, the system can extract both the network topology of manufacturing plants and fault propagation information such as paths associated with faults which occur as part of various processes and machines.

Specifically, the system can utilize temporal and topological features extracted from the manufacturing log data to build the fault propagation paths. The system can provide an efficient way to construct the topology of a production line, without requiring intensive computing resources. The system can also utilize both the production line topology and the temporal sequence of faults to build fault propagation paths, and can assign a weight to the paths based on observed data. The results of both constructing the manufacturing network topology and identifying the fault propagation information can be visually displayed and manipulated in a way which is friendly to human interpretation. Furthermore, the system can convert massive and repetitive log data into succinct visualization for quick on-site diagnosis.

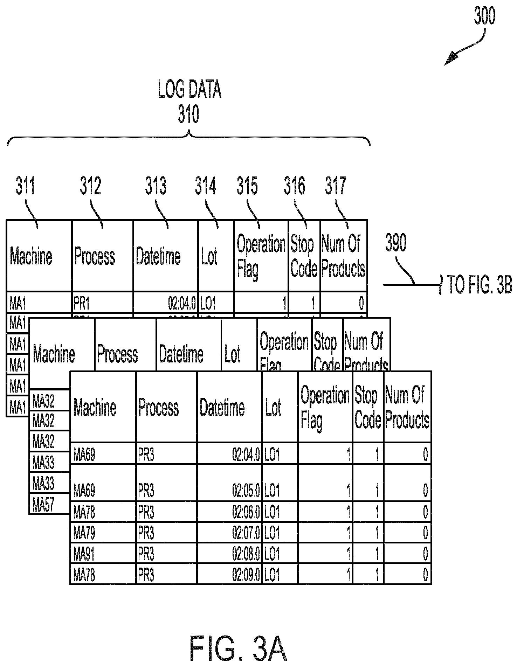

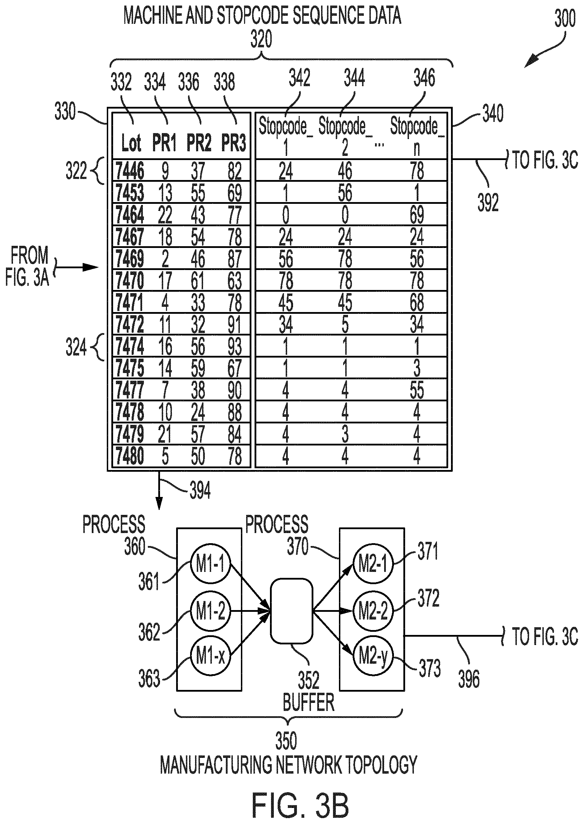

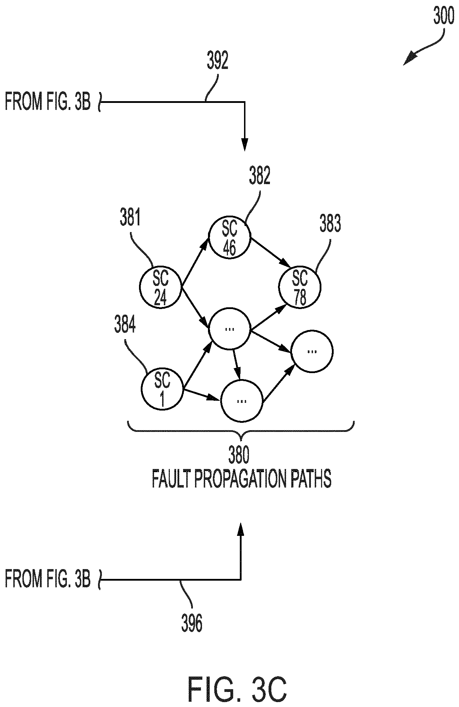

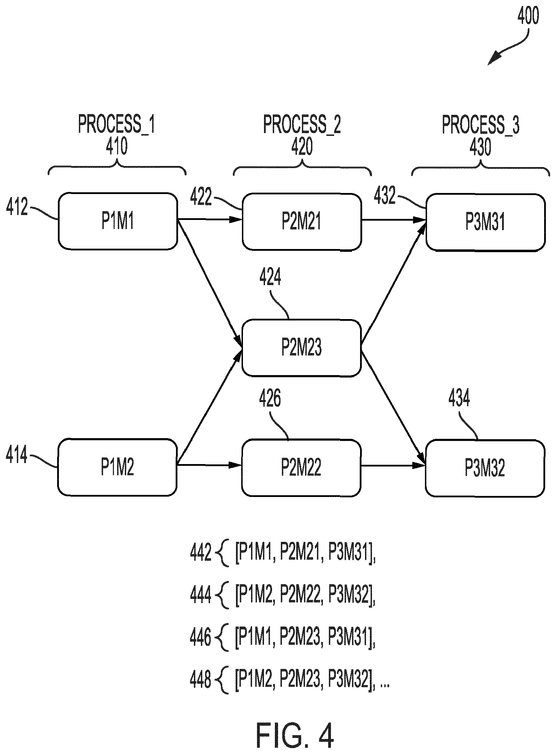

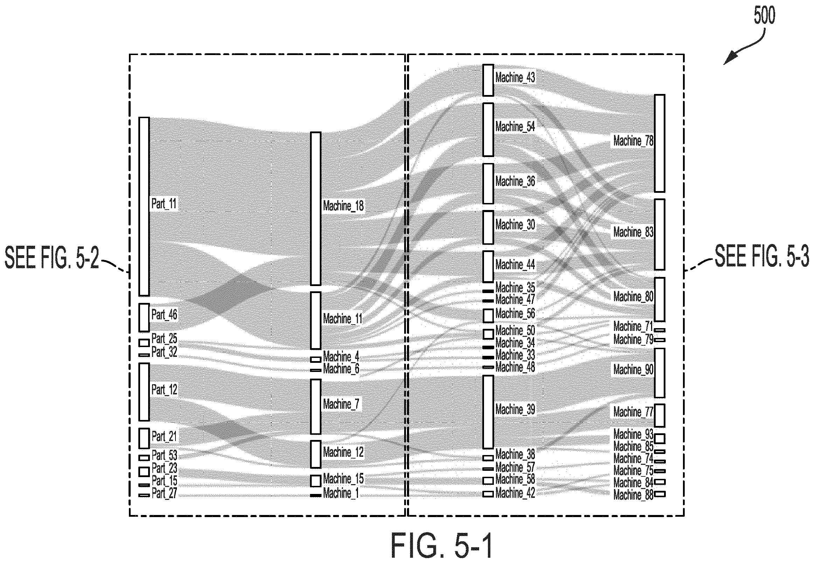

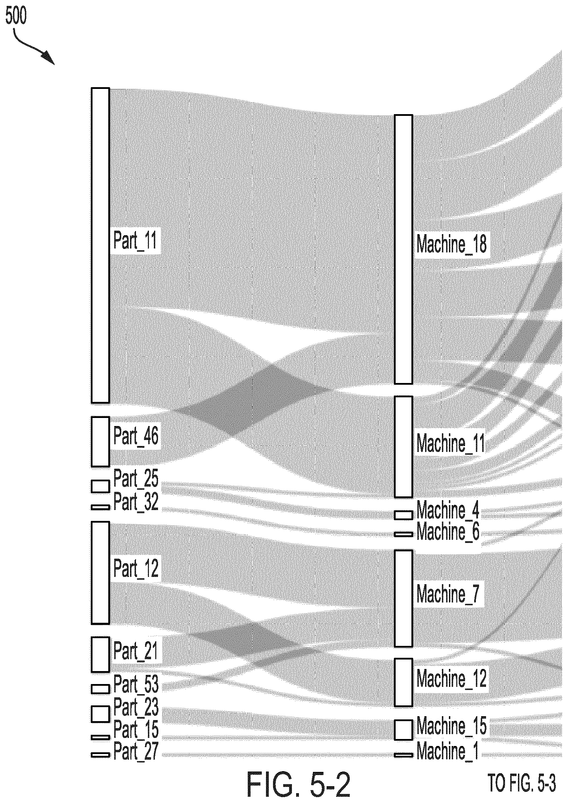

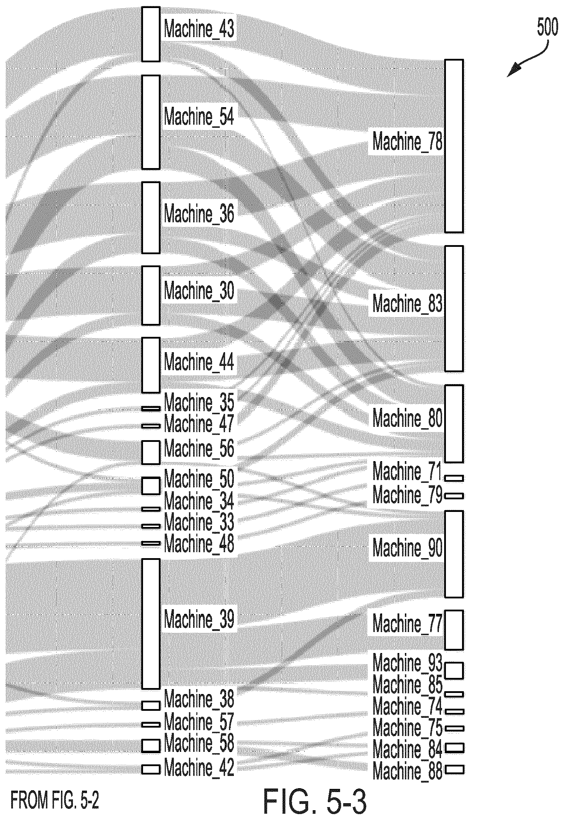

The system can transform raw time series log data into a succinct data sequence organized by a unique product batch number (e.g., a lot number), across multiple processes and associated machines. The transformed data sequence can be referred to as "machine and stopcode sequence data." This can result in reducing the redundancy in a typical log dataset while maintaining the temporal sequence of the filtered data. An exemplary data transformation is described below in relation to FIG. 3. The system can subsequently use a subset of the machine and stopcode sequence data (where the subset contains only the machine numbers and not the stopcodes) to construct a manufacturing network topology, e.g., a topology of a production line, as described below in relation to FIGs. 3 and 4. A visualization of an exemplary manufacturing network topology is described below in relation to FIG. 5.

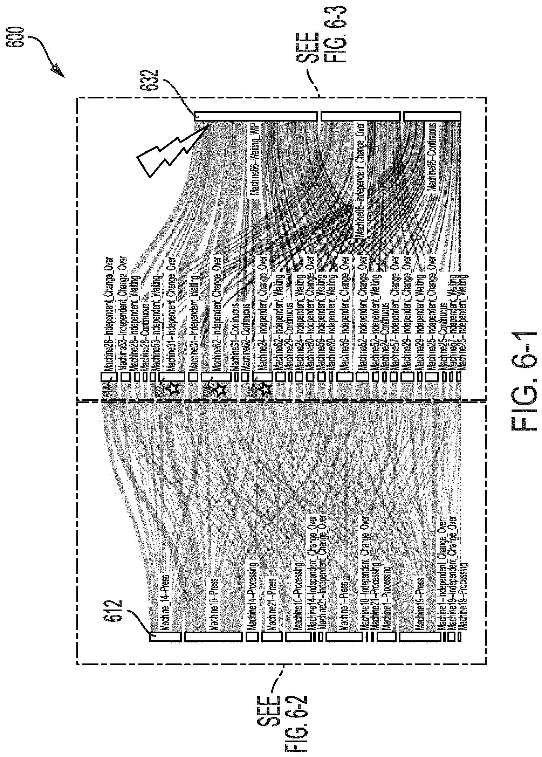

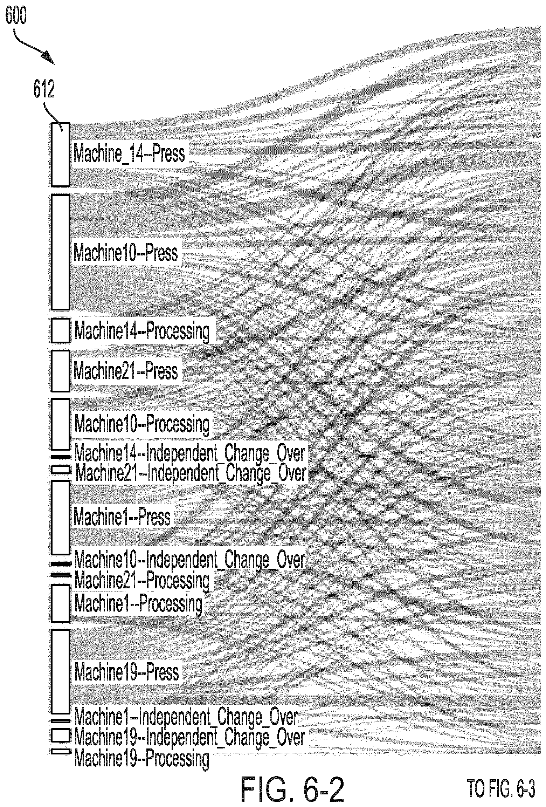

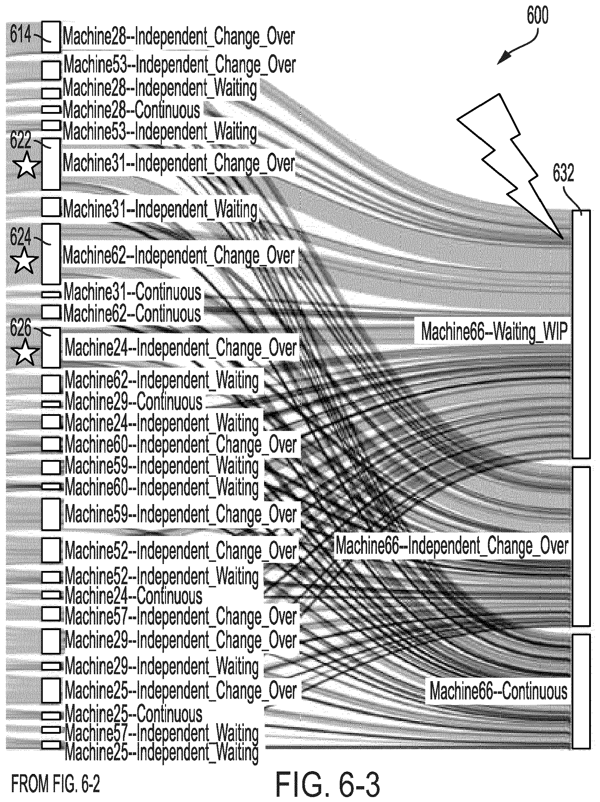

The system can also use the machine and stopcode sequence data, based on a combination of the machine number and the stopcode, to construct fault propagation paths, as described below in relation to FIG. 3. A visualization of exemplary fault propagation paths is described below in relation to FIG. 6.

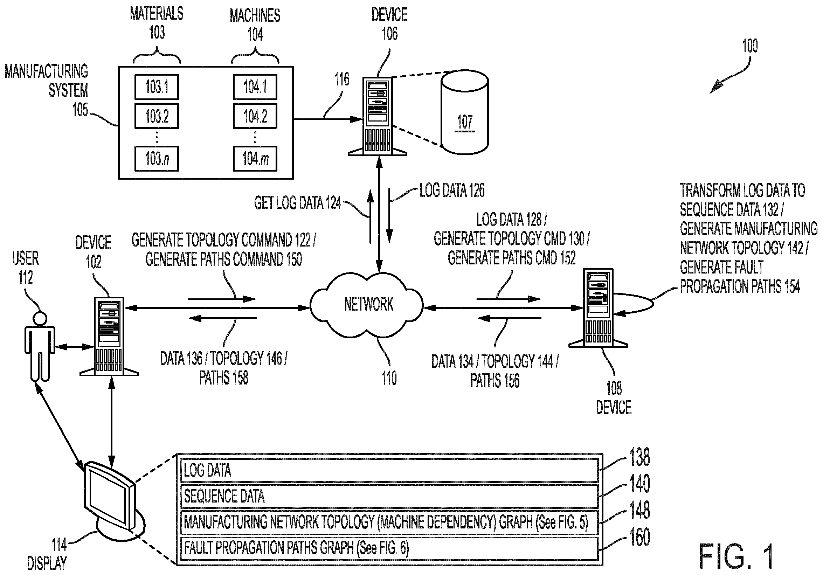

Thus, the described embodiments provide a system for fault diagnosis which addresses the challenges of monitoring the condition of a production line. By extracting machine and stopcode sequence data from the raw manufacturing log data, the system can construct both the manufacturing plant topology and fault propagation information. This extracted information can be visually displayed in various graphs, and can enable an administrator or other user of the system to more quickly analyze a malfunction or failure and its associated true root cause, which can lead to a reduction in the analysis time involved in an overall downtime associated with a component, machine, process, or equipment in a manufacturing facility. The user can further interact with the system by performing a remedial or other action associated with an identified fault, and subsequently rerunning the system to determine the effect of the user's remedial or other action. Exemplary user actions are described below in relation to FIGs. 1, 5, and 6.

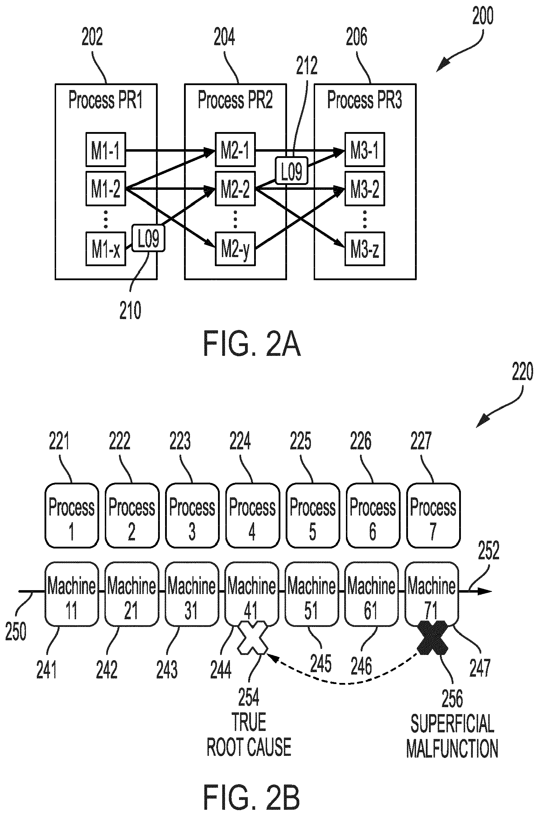

The terms "originating node" and "destination node" refer to a pair of nodes where materials flow, as indicated via a directed edge, from the originating node to the destination node. For example, materials of with a same lot number may flow from a first machine as part of first process (originating node) to a second machine as part of a second process (destination node), as described below in relation to FIGs. 2A, 2B, 3, and 4.

The term "product-batch information" refers to information, such as a lot number, which can indicate or identify materials, products, or other components processed by machines as part of processes in a manufacturing system.

A "stop event" refers to an unplanned event which causes a manufacturing system to stop for a period of time. A "stopcode" refers to an identifier of an issue associated with a machine or a process in a manufacturing system, and may be (but is not necessarily) associated with a stop event.

The term "machine status information" refers to a condition of a given machine, and can include a stopcode, a fault type, or other indicator or identifier of a stop event.

The term "buffer" refers to a physical buffer or physical bin in which materials may be held for a period of time between machines/processes. The period of time may depend on human-related factors (e.g., when a change of personnel may occur or if the material must be manually moved from one machine to another) or system-related factors (e.g., the performance and usage of machines downstream from or subsequent to a given machine).

The term "machine and stopcode sequence data" refers to manufacturing log data which has been transformed by the system into a format which can be used to generate the graphs described below in relation to FIGs. 3, 5, and 6.

The term "processing system" refers to a system with machines or entities which perform processes resulting in outputs, where those outputs are used as inputs to a next machine or entity as part of a flow, through the processing system, of a respective output from a beginning to an end of the flow. In this disclosure, a manufacturing system, manufacturing log data, and a manufacturing network topology are depicted for purposes of illustration. The described system can include other processing systems, including, but not limited to: distributed parallel computations/simulations in a cloud/cluster computing system or facility; and a delivery/distribution supply chain.

The term "output" refers to a material output or other result derived by a machine or entity performing a process upon the material or output. An output can comprise a physical material or the result of a calculation or simulation.

### Exemplary Environment for Determining a Manufacturing Network Topology and Fault Propagation Information

FIG. 1 illustrates an exemplary environment 100 for determining a manufacturing network topology and fault propagation information, in accordance with an embodiment of the present application. Environment 100 can include: a device 102, an associated user 112, and an associated display 114; a manufacturing system 105; a device 106 and an associated storage device 107; and a device 108. Devices 102, 106, and 108 can communicate with each other via a network 110. Manufacturing system 105 can represent a manufacturing facility or a manufacturing network, and can include materials 103 (e.g., 103.1-103.n) and machines 104 (e.g., 104.1-104.m). Materials 103 can undergo various processing by machines 104, e.g., as part of specific processes and as depicted below in relation to FIGs. 2A, 2B, 3, and 4. This processing can generate log data, which can be stored by device 106 and storage device 107 (via a communication 116). Devices 102, 106, and 108 can be a server, a computing device, or any device which can perform the functions described herein.

During operation, user 112 can determine, via display 114 and device 102, a manufacturing network topology for manufacturing system 105. Device 102 can send a generate topology command 122 to device 108. Device 108 can receive generate topology command 122 (as a generate topology command 130). At a subsequent, prior, or similar time, device 106 can send to device 108 (based on a request which triggers a get log data 124 request) log data 126. Device 108 can receive log data 126 (as log data 128), and can transform the received log data to sequence data (operation 132). Device 108 can return the log data and/or the transformed sequence data as data 134 to device 102. Upon receiving data 134 (as data 136), device 102 can display on display 114 log data 138 and sequence data 140. User 112 can use interactive graphical user interface (GUI) elements to manipulate log data 138 and sequence data 140 (not shown).

In response to receiving generate topology command 130, device 108 can also generate the manufacturing network topology (operation 142), and can return a topology 144 to device102. Upon receiving topology 144 (as topology 146), device 102 can display on display 114 a manufacturing network topology (machine dependency) graph 148 (as described below in relation to FIG. 5).

User 112 can also determine, via display 114 and device 102, fault propagation paths for manufacturing system 105 based on the transformed data and the manufacturing network topology. Device 102 can send a generate paths 150 command to device 108. Device 108 can receive generate paths command 150 (as a generate paths command 152). Device 108 can generate the fault propagation paths (operation 154), and can return paths 156 to device 102. Upon receiving paths 156 (as paths 158), device 102 can display on display 114 a fault propagation paths graph 160 (as described below in relation to FIG. 6).

Display 114 can include interactive GUI elements which allow user 112 to manipulate any of the displayed data, as described below in relation to FIGs. 5 and 6. The GUI elements can be located on or near each type of displayed data, e.g., 138, 140, 148, and 160. In some embodiments, the user can address any diagnosed or indicated faults, and can generate commands to re-generate new fault propagation paths. The system can display an overlay of the newly generated fault propagation paths on the original fault propagation paths, and can display other GUI elements which allow the user to view detailed information regarding the differences.

Thus, environment 100 depicts how a user can send a request for data and can further send commands to generate the manufacturing network topology and the fault propagation paths based on the data. Note that while these three elements are shown as distinct data flows in environment 100, the user can also initiate the request for data and the commands to generate both the manufacturing network topology and the fault propagation paths as a single command or user operation, or as any combination of commands or user operations. Device 108 can also perform operations 132, 142, and 154 as part of an automatic or other administrative process or in response to a request from another entity or other user. Furthermore, device 108 can comprise an apparatus with units or modules configured to perform the operations described herein. The operations described herein can be implemented as any combination of operations of one or more modules of an apparatus, computing device, a server, computing system, or other entity.

### General Background and Motivation for Reducing Downtime in a Manufacturing Production Line

FIG. 2A depicts a diagram 200 of an exemplary flow of materials between machines as parts of different processes, in accordance with an embodiment of the present application. Diagram 200 can include a plurality of machines and associated processes, e.g., machines which are involved in a specific process. A process PR1 202 can include actions or processes performed on or by machines M1-1, M1-2, and M1-x; a process PR2 204 can include actions or processes performed on or by machines M2-1, M2-2, and M2-y; and a process PR3 206 can include actions or processes performed on or by machines M3-1, M3-2, and M3-z.

A flow of materials can be indicated by the arrows which are depicted between machines of different processes. A flow of materials can be organized, tracked, or otherwise monitored based on product-batch information, such as a lot number. For example, diagram 200 indicates a lot marked by "LO9." This lot represents materials which flow from machine M1-x as part of process PR1 202, to machine M2-2 as part of process PR2 204 (indicated by LO9 210), and finally to machine M3-1 as part of process PR3 206 (indicated by LO9 212). The multiple pathways (of arrows) can indicate the flow of materials over time.

An individual process can correspond to a dedicated function. For example: process PR1 202 can correspond to a process to draw out cables; process PR2 204 can correspond to a process for cutting the cables; and process PR3 206 can correspond to a process for placing connectors on the ends of the cables. Within an individual process, each machine may be involved in a different part of the process. For example, in process PR1 202, machine M1-1 may be used for drawing out cables of a specific diameter of cables or a diameters of a varying range, and machine M1-2 may include a redundant machine which may be used to handle jobs greater than a certain volume or threshold. In process PR2 204, machine M2-1 may be used to cut cables of a smaller length or diameter, and machine M2-2 may be used to cut cables of a larger length or diameter, e.g., by using a machine which is sturdier and has the capacity or strength to cut a cable of a thicker diameter or material than the cables cut by machine M2-1.

This is in contrast to a conventional assembly line, in which each machine may be dependent on a single prior machine. The described embodiments may also include redundancy, i.e., in the event that one machine of a process fails, a redundant machine of the same process can take over the job of the failed machine in order to ensure continuity in the production line. Each machine may require different parts from prior machines as part of a prior process. In addition, materials may be placed in a physical buffer (e.g., a bin, sorting bin, or other container) between machines/processes, e.g., after being processed by machine M1-x as part of process PR1 202, and prior to being processed by machine M2-2 as part of process PR2 204. An exemplary buffer is depicted below in relation to FIG. 3.

FIG. 2B illustrates a diagram 220 of a superficial malfunction and a true root cause in an environment with multiple processes and machines, in accordance with an embodiment of the present application. Diagram 220 can depict a simplified production line which includes multiple processes, with one machine in each process, e.g.: a process 1 221 with an associated machine 11 241; a process 2 222 with an associated machine 21 242; a process 3 223 with an associated machine 31 243; a process 4 224 with an associated machine 244; a process 5 225 with an associated machine 51 245; a process 6 226 with an associated machine 61 246; and a process 7 227 with an associated machine 71 247. A material (or a lot which includes similarly categorized materials) can flow through the production line indicated in diagram 220, through processes 1 221 to 7 227 via, respectively, machines 11 241 to 71 247, e.g., as indicated by a communication at a start 250 and an end 252.

The system may determine or detect a superficial malfunction 256 at individual machine 71 247. However, the detected malfunction may not necessarily indicate that individual machine 71 247 has issues. Instead, the detected malfunction may indicate that a prior machine in the production line has issues which eventually lead to the detected malfunction, e.g., that a true root cause 254 associated with prior machine 41 244 is responsible for the detected superficial malfunction 256 associated with machine 71 247.

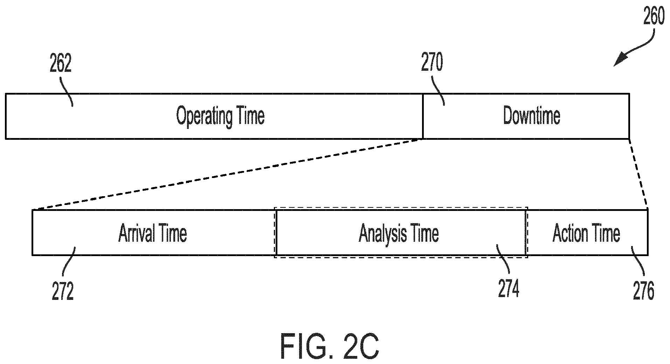

FIG. 2C illustrates a diagram 260 of activity time involved in a manufacturing production line, including a downtime, in accordance with an embodiment of the present application. Diagram 260 can indicate that a total time involved in a manufacturing production line includes both an operating time 262 and a downtime 270. Downtime 270 can include: an arrival time 272; an analysis time 274; and an action time 276.

Arrival time 272 can include the amount of time involved to identify the problem, i.e., an amount of time from the system detecting the problem to the problem being noticed or discovered by a user, field engineer, or other administrative user. Analysis time 274 can include the amount of time involved for the user, field engineer, or other administrative user to analyze the detected problem and determine a solution to address the problem. Action time 276 can include the amount of time to fix the problem, e.g., by implementing the determined solution.

The embodiments described herein provide a system which can decrease the amount of analysis time required during a downtime, which can result in a more improved and efficient system, both for an individual production line and across all production lines in a manufacturing system.

### Exemplary Environment for Determining a Manufacturing Network Topology and Fault Propagation Information

FIGs. 3A, 3B, and 3C illustrate an exemplary environment 300 for determining a manufacturing network topology and fault propagation information, in accordance with an embodiment of the present application. Environment 300 can include data or information associated with or related to a manufacturing system which includes machines and associated processes (e.g., production lines), including: log data 310; machine and stopcode sequence data 320; a manufacturing network topology 350; and fault propagation paths 380. As shown in FIG. 3A, log data 310 can include raw data as time series log tables. For example, a table can include entries with one or more of the following columns: a machine 311; a process 312; a date and/or time (timestamp information) 313; a lot number (product-batch information) 314; an operation flag 315; a stopcode (machine status information) 316; and a number of products 317.

The described embodiments can use product-batch information, such as the lot number, to identify relevant information for generation of both the manufacturing network topology and the fault propagation paths. The same lot numbers may be found in or as a part of the flow of materials through different machines/processes. The system can use these same or common lot numbers to "connect" machines together, i.e., to build the physical links between machines and the logical links between processes.

During operation, the system can store log data 310 and transform log data 310 into machine and stopcode sequence data 320 (via an operation 390). As shown in FIG. 3B, machine and stopcode sequence data 320 can include information split into two groups. A first group 330 can include, by lot number, all processes and machines through which the materials of a given lot number flow as part of a given process. A second group 340 can include stopcodes experienced by the materials of the given lot number.

Group 330 can include entries by a given lot number, with columns corresponding to a given process, where the values of entries for each column correspond to a machine number associated with the given process. List 330 can include entries with columns indicating: a lot number 332; a first process PR1 334; a second process PR2 336; and a third process PR3 338. For example, an entry 322 can correspond to a lot number 7446, and can further indicate a flow of materials for lot number 7446 through the following machines/processes: a machine 9 in process PR1; a machine 37 in process PR2; and a machine 82 in process PR3. Similarly, an entry 324 can correspond to a lot number 7474, and can further indicate a flow of materials for lot number 7474 through the following machines/processes: a machine 16 in process PR1; a machine 56 in process PR2; and a machine 93 in process PR3.

The system can build a trie data structure to represent the connections between the various machines in a way which can be easily visualized, as described above in relation to FIG. 2A and below in relation to FIGs. 4 and 5. Based on the information in group 330, the system can generate or determine manufacturing network topology 350 (via an operation 394). Manufacturing network topology 350 can correspond to the manufacturing system and can indicate flows of materials between the machines as part of the processes. For example, manufacturing network topology 350 can indicate processes 360 and 370, where each process has multiple associated machines. Process 360 can include machines M1-1 361, M1-2 362, and M1-x 363, while process 370 can include machines M2-1 371, M2-2 372, and M2-y 373.

As described above, the manufacturing network topology can include physical buffers (such as a physical bin) in which materials may be placed for a certain period of time after being processed by one machine and prior to being processed by the next machine. For example, materials can flow from being processed by machine M1-1 361 of process 360, to a buffer 352 for a period of time, and to being processed by machine M2-2 372 of process 370. Note that because manufacturing network topology 350 depicts buffer 352, it may not be clear to which machine a flow of materials is to continue in process 370. A more detailed description is provided below in relation to FIG. 4.

In addition, the system can use the transformed data (i.e., machine and stopcode sequence data 320), as well as manufacturing network topology 350, to generate or determine fault propagation paths 380 (via, respectively, operations or information 392 and 396). As shown in FIG. 3C, fault propagation paths 380 can be a graph with nodes which indicate a possible failure or a fault as a stop event, and edges which indicate logical flows of materials between nodes. That is, fault propagation paths 380 can display and indicate a flow of how a fault propagates through the manufacturing system, based on the specific stopcodes. When the system detects a possible failure or fault, the user, field engineer, or other administrative user can use the displayed fault propagation paths to determine the cascading or propagating fault.

For example, in fault propagation paths 380, the system can use the information of machine and stopcode sequence data 320 as well as manufacturing network topology 350 to visualize the paths. A node 381 indicating stopcode 24 can flow to a node 382 indicating a stopcode 46. Node 382 can in turn flow to a node 383 indicating a stopcode 78. These nodes which indicate stopcodes can correspond to the machines/processes for a given lot. That is, in entry 322, for log number 7446, machine 9/PR1 experienced a fault with a stopcode 24, machine 37/PR2 experienced a fault with a stopcode 46, and machine 82/PR3 experienced a fault with a stopcode 78. This sequence of stopcodes is depicted in fault propagation paths 380.

In general, the majority of log data is based on normal operations of a manufacturing system. The system may use a default stopcode (such as "0," not shown) for normal operations. Group 340 in machine and stopcode sequence data 320 depicts samples with non-zero stopcode entries. Some lots may also only experience a single stopcode, which can indicate that this stopcode or stop event does not trigger any other stopcodes (e.g., the stopcode of "1" as for lot 7474). Furthermore, the log data may not be generated based on real-time data. Instead, the log data may be based on a period of time, such as over several days, a week, or a month. For example, a user may be interested in the performance of a single lot over a period of a month, and can use both manufacturing network topology 350 and fault propagation paths 380 to determine if a certain combination of machines involved in the flow of materials for a single lot contributes more to the downtime as compared to other machines.

### Machine/Stopcode Dependency Graph with Enriched Trie Data Structure

FIG. 4 illustrates an exemplary machine/stopcode dependency graph 400 with an enriched trie data structure, in accordance with an embodiment of the present application. Graph 400 can include nodes which indicate a flow of materials or parts of a given lot number from a first machine involved in a first process to a second machine involved in a subsequent process. For example, graph 400 indicates three processes: a process_1 410; a process_2 420; and a process_3 430. Process_1 410 can be associated with two machines: a machine 412 (indicated as "P1M1") and a machine 414 (indicated as "P1M2"). Process_2 420 can be associated with three machines: a machine 422 (indicated as "P2M21"); a machine 424 (indicated as "P2M23"); and a machine 426 (indicated as "P2M22").

The system can generate elements or entries 442, 444, 446, and 448 as part of an enriched trie data structure. Entry 442 is indicated as "[P1M1, P2M21, P3M31]" and can be seen by following the arrows as directed edges from one node to the next. Similarly, entry 444 is indicated as "[P1M2, P2M22, P3M32]", entry 446 is indicated as "[P1M1, P2M23, P3M31]," and entry 448 is indicated as "[P1M2, P2M23, P3M32]." Each of these entries can be seen by following the arrows as directed edges from one node to the next. Other elements or entries in the trie data structure may exist, but are not listed. The described embodiments can store data in an enriched trie data structure because the system can store additional information at each node, e.g., production-line specific information such as the utilization rate of the machine. For example, the system can assign weights to each node/machine based on the number of occurrences of the node in the trie data structure.

The system can iterate through the machine and stopcode sequence logs and create trees based on the lot number for machines/processes. The system can merge any nodes which have previously appeared, and can also update the weight of a given node based on the number of occurrences of the node. An exemplary display of a manufacturing network topology graph is described below in relation to FIG. 5, and an exemplary display of a fault propagation graph is described below in relation to FIG. 6.

### Exemplary Machine Dependency Graph

FIGs. 5-1, 5-2, and 5-3 illustrate an exemplary machine dependency graph 500, including an extracted plant topology and material flow, in accordance with an embodiment of the present application. FIG. 5-2 illustrates an enlarged view of the left half of FIG. 5-1, while FIG. 5-3 illustrates an enlarged view of the right half of FIG. 5-1. Graph 500 illustrates the flows of materials through a manufacturing system, starting with parts (e.g., components or materials associated with a same lot number or with the same product-batch information) on the far left, and moving through each respective machine, where each machine is indicated as a node of a certain height as indicated. The height of the node for each indicated machine can correspond to the number of parts which pass through or are processed by a given machine. The taller the node, the greater the number of parts which pass through or are processed by a given machine. The height of the node or the number of same parts processed by a machine can be referred to as the "utilization rate" of the given machine. For example, the node indicated by Machine_18 appears as the tallest link, and processes parts from two lots, which are indicated as "Part_11" and "Part_46." Furthermore, the taller the indicated flow of materials out of a node, the greater the number of parts which pass through or are processed by a given machine. Parts with a same lot number or product-batch information can pass through or be processed by different machines as part of a same or a different process.

For example, in the lot of parts indicated as "Part_12," approximately half of those parts (depicted as the "upper half') pass through Machine_7. The other half of the parts (depicted as the "lower half' of Part_12) pass through Machine_12. For the upper half which passes through Machine_7, graph 500 indicates that the materials flow onwards to Machine_50 and Machine_90, or onwards to Machine_39 and Machine 90. For the lower half of the parts, which pass through Machine_12, graph 500 indicates that the materials flow onwards to Machine_56 and Machine_90, or onwards to Machine_39 and one of Machine_77 or Machine_90, or onwards to Machine_38 and Machine_90). The height of each outgoing flow of materials from a given node indicates the number of parts which are processed by the machine indicated by the given node.

Thus, graph 500 provides a clear visualization of the network topology of the manufacturing system, including the flow of materials through the system, the interconnectedness of the various machines, the lots with the greater number of parts, and the machines with the highest utilization rate.

### Exemplary Fault Propagation Graph

FIGs. 6-1, 6-2, and 6-3 illustrate an exemplary fault propagation graph 600, in accordance with an embodiment of the present application. FIG. 6-2 illustrates an enlarged view of the left half of FIG. 6-1, while FIG. 6-3 illustrates an enlarged view of the right half of FIG. 6-1. Graph 600 illustrates the flows of faults as they propagate through the manufacturing system, and can indicate a logical topology of stop events. Each node in graph 600 can indicate a stopcode associated with a given machine. The height of a respective node can correspond to a number of stopcodes associated with nodes prior to the respective node. The weight of an edge can represent how frequently a specific link is identified from the log data. The thicker the link, the more frequent a given fault path.

For example, in graph 600, a node 612 is labeled "Machine 14-Press," which indicates that a machine 14 (e.g., a lumber machine) has experienced a stopcode corresponding to a "press" process or other press-related event. Node 612 includes many edges leading to other nodes, including, e.g., an edge to a node 614. Node 614 is labeled "Machine28-Independent_Change_ Over," which indicates that a machine 28 has experienced a stopcode corresponding to a wait for a change of personnel.

Graph 600 can also indicate the most significant contributors to a particular machine/stopcode combination. For example, a node 632 is labeled "Machine66-Waiting_WIP," which indicates that machine 66 has experienced a stopcode corresponding to a waiting process with a work-in-progress notation. The most significant contributors to node 632, based on the thickness of the edges as input into node 632 as well as the height of the contributing or prior nodes, are a node 622 ("Machine31-Independent_Change_Over), a node 624 ("Machine62-Independent Change Over"), and a node 626 ("Machine24-Independent_Change_Over"). The thickness of the various edges from each of these three contributing nodes to node 632 can indicate a frequency with which a particular link or stopcode is identified from the log data. That is, each grey stream which flows into node 632 can correspond to a lot or batch of materials or products.

A user can use graph 600 to visually determine connections, relationships, and dependencies. In some embodiments, graph 600 can include interactive graphical user interface (GUI) elements, and the user can manipulate the GUI elements to obtain more or different information. For example, the user can hover over or click on a node to obtain more information about the node, including the relevant machine number, other related machine information, the relevant stopcode, utilization information (e.g., a utilization rate), the number of occurrences of a given stopcode for the relevant machine, machine status information, product-batch information (e.g., a lot number), and timestamp information (e.g., a timestamp associated with the stop event, a start time, a wait time, an end time, etc.). The user can also manipulate graph 600 by moving the nodes around to more clearly view the incoming and outgoing edges, as well as related information about those edges.

### Method for Determining a Manufacturing Network Topology and Fault Propagation Information

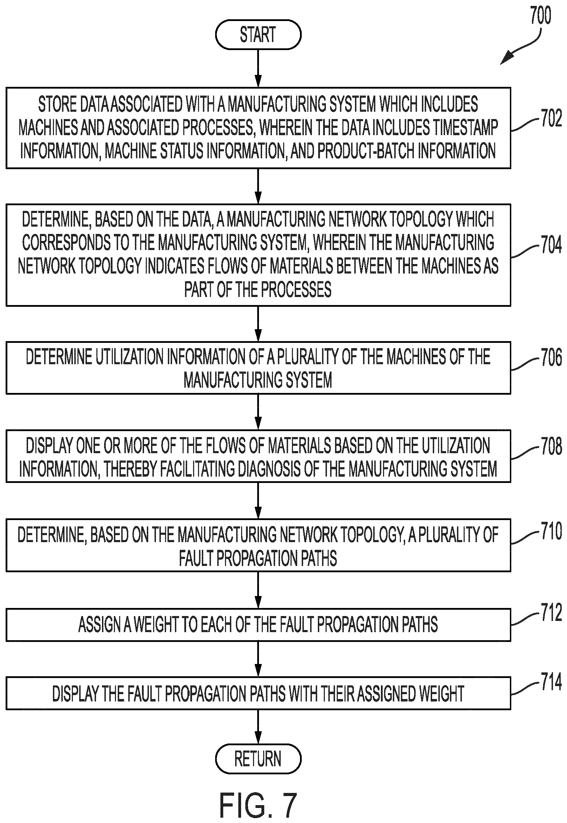

FIG. 7 presents a flow chart 700 illustrating a method for determining a manufacturing network topology and fault propagation information, in accordance with an embodiment of the present application. During operation, the system stores data associated with a manufacturing system which includes machines and associated processes, wherein the data includes timestamp information, machine status information, and product-batch information (operation 702). The system determines, based on the data, a manufacturing network topology which corresponds to the manufacturing system, wherein the manufacturing network topology indicates flows of materials between the machines as part of the processes (operation 704). The system determines utilization information of a plurality of the machines of the manufacturing system (operation 706). The system displays one or more of the flows of materials based on the utilization information, thereby facilitating diagnosis of the manufacturing system (operation 708).

The system can display the one or more flows of materials by displaying a graph of the manufacturing network topology, wherein a respective node in the graph indicates, for a respective material, a first machine which processes the respective material and a first process associated with the first machine, and wherein a respective edge in the graph indicates, for the respective material, a physical flow from an originating node to a destination node. A size of the respective node in the displayed graph corresponds to a number of parts which are processed by the first machine, and a weight of the respective edge in the displayed graph indicates the utilization information, including a utilization rate, associated with the originating node and the destination node. Furthermore, the respective material can be held in a physical buffer between machines indicated by the originating node and the destination node.

The system determines, based on the manufacturing network topology, a plurality of fault propagation paths (operation 710), and assigns a weight to each of the fault propagation paths (operation 712). The system displays the fault propagation paths with their assigned weight (operation 714). The system can display the fault propagation paths by displaying a graph of the fault propagation paths, wherein a respective node in the graph indicates, for a respective material, a first machine which processes the respective material, a first process associated with the first machine, and a stopcode associated with the first machine and the first process in processing the respective material, and wherein a respective edge in the graph indicates, for the respective material, a logical flow from an originating node to a destination node.

### Summary of Application; Integration into a Practical Application; Improvements to Technical Fields

In summary, the embodiments described herein provide a system which utilizes temporal and topological features extracted from the manufacturing log data to build both the manufacturing network topology and the fault propagation paths. The system can be integrated into a practical application because it can efficiently construct production line topology without requiring intensive computing resources (e.g., installation of additional sensing systems) or focusing on a single component/machine instead of the overall system.

The system can use the manufacturing log data, and after transforming the log data to machine and stopcode sequence data (as described above in relation to FIG. 2), the system can generate and display both the manufacturing network topology and the fault propagation paths. The visual display of these graphs can be used by a user to more quickly and efficiently interpret and assess the condition of the overall manufacturing system, e.g., allowing for fault diagnosis via the displayed screen and interactive graphical user elements. That is, the system can convert a massive amount of repetitive log data into a succinct visualization for quick, efficient, and effective on-site diagnosis.

The data transformation and graph generation/display described herein can result in a reduction in the analysis time involved in the overall downtime of a component, machine, process, or other equipment of the manufacturing system or in the manufacturing facility. These improvements can result in an improvement in the operation of the machines in the manufacturing system, the performance of a production line, and the overall manufacturing system.

The described embodiments can also result in an improvement to the technical and technological fields of manufacturing system analysis, production line monitoring, data analysis, data mining, visualization of machine dependencies, and visualization of fault propagation paths. By utilizing the log data obtained from multiple machines, the system eliminates the need to install additional machines or sensors to determine the manufacturing network topology and fault propagation paths.

### Exemplary Distributed Computer System

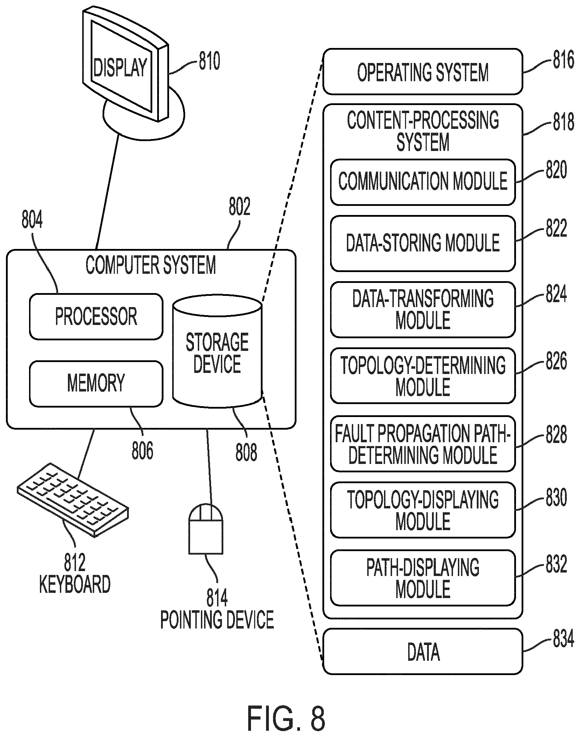

FIG. 8 illustrates an exemplary distributed computer and communication system 802 that facilitates determining a manufacturing network topology and fault propagation information, in accordance with an embodiment of the present application. Computer system 802 includes a processor 804, a memory 806, and a storage device 808. Memory 806 can include a volatile memory (e.g., RAM) that serves as a managed memory, and can be used to store one or more memory pools. Furthermore, computer system 802 can be coupled to a display device 810, a keyboard 812, and a pointing device 814. Storage device 808 can store an operating system 816, a content-processing system 818, and data 834.

Content-processing system 818 can include instructions, which when executed by computer system 802, can cause computer system 802 to perform methods and/or processes described in this disclosure. Specifically, content-processing system 818 may include instructions for sending and/or receiving/obtaining data packets to/from other network nodes across a computer network (communication module 820). A data packet can include, e.g., a request, a command, data, user input, sequence data, log data, a topology, paths, etc.

Content-processing system 818 can further include instructions for storing data associated with a manufacturing system which includes machines and associated processes, wherein the data includes timestamp information, machine status information, and product-batch information (data-storing module 822). Content-processing system 818 can include instructions for transforming log data into sequence data, as described above in relation to FIG. 3 (data-transforming module 826). Content-processing system 818 can include instructions for determining, based on the data, a manufacturing network topology which corresponds to the manufacturing system, wherein the manufacturing network topology indicates flows of materials between the machines as part of the processes (topology-determining module 826). Content-processing system 818 can also include instructions for determining utilization information of a plurality of the machines of the manufacturing system (topology-determining module 826). Content-processing system 818 can include instructions for displaying one or more of the flows of materials based on the utilization information, thereby facilitating diagnosis of the manufacturing system (topology-displaying module 830).

Content-processing system 818 can additionally include instructions for determining, based on the manufacturing network topology, a plurality of fault propagation paths (fault propagation path-determining module 828). Content-processing system 818 can include instructions for assigning a weight to each of the fault propagation paths (fault propagation path-determining module 828). Content-processing system 818 can include instructions for displaying the fault propagation paths with their assigned weight (path-displaying module 832).

Data 834 can include any data that is required as input or that is generated as output by the methods and/or processes described in this disclosure. Specifically, data 834 can store at least: data; log data; time series or sequence data; timestamp information; machine status information; a stopcode or fault type; product-batch information or a lot number; a material name or other identifier for a material; a topology; a manufacturing network topology and an associated graph; a path; fault propagation paths and an associated graph; utilization information of a machine; a utilization rate; information related to a plurality of machines and processes of a manufacturing system; a size; a number of parts; a height of a node; a thickness of an edge; information relating to one or more physical objects, products, or materials of a manufacturing system; information associated with a lot number and a production line; an assigned weight for a path; a process; a number of stopcodes; and a frequency of occurrence in data of stopcodes.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules or apparatus. The hardware modules or apparatus can include, but are not limited to, application-specific integrated circuit (ASIC) chips, field-programmable gate arrays (FPGAs), dedicated or shared processors that execute a particular software module or a piece of code at a particular time, and other programmable-logic devices now known or later developed. When the hardware modules or apparatus are activated, they perform the methods and processes included within them.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

## Claims

1. A computer-implemented method, comprising:
storing data associated with a processing system which includes machines and associated processes, wherein the data includes timestamp information, machine status information, and product-batch information;
determining, based on the data, a network topology which corresponds to the processing system, wherein the network topology indicates flows of outputs between the machines as part of the processes;
determining utilization information of a plurality of the machines of the processing system; and
displaying one or more of the flows of outputs based on the utilization information, thereby facilitating diagnosis of the processing system.

2. The method of claim 1, wherein displaying the one or more flows of outputs comprises:
displaying a graph of the network topology,
wherein a respective node in the graph indicates, for a respective output, a first machine which processes the respective output and a first process associated with the first machine, and
wherein a respective edge in the graph indicates, for the respective output, a flow from an originating node to a destination node.

3. The method of claim 2,
wherein a size of the respective node in the displayed graph corresponds to a number of parts which are processed by the first machine, and
wherein a weight of the respective edge in the displayed graph indicates the utilization information, including a utilization rate, associated with the originating node and the destination node.

4. The method of claim 2,
wherein the respective output is held for a period of time in a physical buffer between machines indicated by the originating node and the destination node.

5. The method of claim 1,
wherein the product-batch information comprises a lot number which corresponds to a plurality of physical objects of the processing system, wherein the physical objects share at least one common characteristic, and
wherein the machine status information comprises one or more of a stopcode and a fault type.

6. The method of claim 1,
wherein the outputs comprise materials and include physical objects upon which the machines of the processing system perform the processes, and
wherein a respective physical object is associated with a lot number and a production line of the processing system.

7. The method of claim 1, further comprising:
determining, based on the network topology, a plurality of fault propagation paths;
assigning a weight to each of the fault propagation paths; and
displaying the fault propagation paths with their assigned weight.

8. The method of claim 7, wherein displaying the fault propagation paths comprises:
displaying a graph of the fault propagation paths,
wherein a respective node in the graph indicates, for a respective output, a first machine which processes the respective output, a first process associated with the first machine, and a stopcode associated with the first machine and the first process in processing the respective output, and
wherein a respective edge in the graph indicates, for the respective output, a logical flow from an originating node to a destination node.

9. The method of claim 8,
wherein a size of the respective node in the displayed graph corresponds to a number of stopcodes associated with nodes prior to the first machine in the displayed graph,
wherein a weight of the respective edge in the displayed graph indicates a frequency of occurrence in the data of stopcodes associated with the originating node and the destination node, and
wherein assigning the weight to the fault propagation paths is based on the weight of the respective edge.

10. The method of claim 1, wherein the processing system comprises one or more of:
a manufacturing system, wherein the network topology further indicates flows of materials between the machines as part of the processes;
a cloud or cluster computing system, wherein the network topology further indicates flows of distributed or parallel computations or simulations associated with outputs between the machines as part of the processes of the cloud or cluster computing system; and
a supply chain system, wherein the network topology further indicates flows of materials associated with delivery and distribution outputs between the machines as part of the processes of the supply chain system.

11. A computer system, the system comprising:
a processor; and
a storage device storing instructions that when executed by the processor cause the processor to perform a method, the method comprising:
storing data associated with a processing system which includes machines and associated processes, wherein the data includes timestamp information, machine status information, and product-batch information;
determining, based on the data, a network topology which corresponds to the processing system, wherein the network topology indicates flows of outputs between the machines as part of the processes;
determining utilization information of a plurality of the machines of the processing system; and
displaying one or more of the flows of outputs based on the utilization information, thereby facilitating diagnosis of the processing system.

12. The computer system of claim 11, wherein displaying the one or more flows of outputs comprises:
displaying a graph of the network topology,
wherein a respective node in the graph indicates, for a respective output, a first machine which processes the respective output, and a first process associated with the first machine, and
wherein a respective edge in the graph indicates, for the respective output, a flow from an originating node to a destination node.

13. The computer system of claim 12,
wherein a size of the respective node in the displayed graph corresponds to a number of parts which are processed by the first machine, and
wherein a weight of the respective edge in the displayed graph indicates the utilization information, including a utilization rate, associated with the originating node and the destination node.

14. The computer system of claim 12,
wherein the respective output is held for a period of time in a physical buffer between machines indicated by the originating node and the destination node.

15. The computer system of claim 11,
wherein the product-batch information comprises a lot number which corresponds to a plurality of physical objects of the processing system, wherein the physical objects share at least one common characteristic,
wherein the machine status information comprises one or more of a stopcode and a fault type,
wherein the outputs comprise materials and include physical objects upon which the machines of the processing system perform the processes, and
wherein a respective physical object is associated with a lot number and a production line of the processing system.

16. The computer system of claim 11, where the method further comprises:
determining, based on the network topology, a plurality of fault propagation paths;
assigning a weight to each of the fault propagation paths; and
displaying the fault propagation paths with their assigned weight.

17. The computer system of claim 16, wherein displaying the fault propagation paths comprises:
displaying a graph of the fault propagation paths,
wherein a respective node in the graph indicates, for a respective output, a first machine which processes the respective output, a first process associated with the first machine, and a stopcode associated with the first machine and the first process in processing the respective output, and
wherein a respective edge in the graph indicates, for the respective output, a logical flow from an originating node to a destination node.

18. The computer system of claim 17,
wherein a size of the respective node in the displayed graph corresponds to a number of stopcodes associated with nodes prior to the first machine in the displayed graph,
wherein a weight of the respective edge in the displayed graph indicates a frequency of occurrence in the data of stopcodes associated with the originating node and the destination node, and
wherein assigning the weight to the fault propagation paths is based on the weight of the respective edge.

19. The computer system of claim 11, wherein the processing system comprises one or more of:
a manufacturing system, wherein the network topology further indicates flows of materials between the machines as part of the processes;
a cloud or cluster computing system, wherein the network topology further indicates flows of distributed or parallel computations or simulations associated with outputs between the machines as part of the processes of the cloud or cluster computing system; and
a supply chain system, wherein the network topology further indicates flows of materials associated with delivery and distribution outputs between the machines as part of the processes of the supply chain system.

20. An apparatus, comprising:
a data-storing module configured to store data associated with a processing system which includes machines and associated processes, wherein the data includes timestamp information, machine status information, and product-batch information;
a topology-determining module configured to determine, based on the data, a network topology which corresponds to the processing system, wherein the network topology indicates flows of outputs between the machines as part of the processes;
wherein the topology-determining module is further configured to determine utilization information of a plurality of the machines of the processing system;
a topology-displaying module configured to display one or more of the flows of outputs based on the utilization information, thereby facilitating diagnosis of the processing system, by displaying a graph of the network topology;
a fault propagation path-determining module configured to determine, based on the network topology, a plurality of fault propagation paths;
wherein the fault propagation path-determining module is further configured to assign a weight to each of the fault propagation paths; and
a path-displaying module configured to display the fault propagation paths with their assigned weight, by displaying a graph of the fault propagation paths..
